# EUROPÄISCHE PATENTSCHRIFT

(11) **EP 1 171 385 B1**
(45) Veröffentlichungstag und Bekanntmachung des Hinweises auf die Patenterteilung: **14.05.2003**
(21) Anmeldenummer: 00918770.9
(22) Anmeldetag: 08.03.2000
(51) Int. Cl.: C01F 7/00

(54) **VORRICHTUNG UND VERFAHREN ZUR HERSTELLUNG VON SALZSCHMELZEN UND DEREN VERWENDUNG**
DEVICE AND METHOD FOR PRODUCING MOLTEN SALTS AND USE THEREOF
DISPOSITIF ET PROCEDE DESTINES A LA PRODUCTION DE SELS FONDUS ET LEUR UTILISATION

(30) Priorität: 24.03.1999 DE 19913190
(43) Veröffentlichungstag der Anmeldung: 16.01.2002
(73) Patentinhaber: MERCK PATENT GmbH, 64293 Darmstadt (DE)
(72) Erfinder: OHREM, Hans, Leonhard, D-64342 Jugenheim (DE); BRZEZINSKI, Susanne, D-64683 Einhausen (DE)
(86) Internationale Anmeldenummer: EP0002009
(87) Internationale Veröffentlichungsnummer: WO00056659

(56) Entgegenhaltungen:
- DE-A- 3 718 920
- FR-A- 2 168 912
- US-A- 3 761 578

## Beschreibung

Die Erfindung betrifft eine Vorrichtung und ein Verfahren, wie in den Ansprüchen 1 und 5 dargestellt, zur Herstellung von Salzschmelzen und deren Mischungen mittels eines Rohrreaktors und eines kontinuierlichen Rührreaktors, in dem die Edukte aufgeschmolzen, zur Reaktion gebracht werden und die Reaktionsprodukte anschließend über Säulen oder Kolonnen zur Aufreinigung geleitet werden.

Schmelzen von Salzen wie z.B. NaAlCl₄ haben verschiedene Einsatzgebiete. Salzschmelzen können als Speichermedium in Wärmespeichern, als Wärmeübertragungsmittel, z.B. in Heizbädern, zum Abdecken und Reinigen geschmolzener Metalle, zur galvanotechnischen Beschichtung von hochschmelzenden Werkstoffen oder als Schmelzelektrolyte in Primärbatterien, wie in GB 2046506 beschrieben, eingesetzt werden. Eine weitere Einsatzmöglichkeit dieser Salze ist in wiederaufladbaren Natriumbatterien. Die Salze werden in Batterien eingesetzt, die Betriebstemperaturen zwischen 130°C und 200°C haben (K.M. Abraham, D. M. Pasquariello, J. Electrochem. Soc., Vol. 137, 1189-1190, (1990)).

In DE 3419279 wird eine elektrochemische Zelle beschrieben, in der die Kathodenmatrix mit einem Natrium-Aluminiumhalogenid-Salzschmelzelektrolyt imprägniert ist.

Ein relativ neues Einsatzgebiet ist die "ZEBRA-Batterie". Diese Hochtemperatur-Zelle besteht aus einer Elektrode aus flüssigem Natrium, einem beta Aluminium Elektrolyten und einer Elektrode aus Übergangsmetallchlorid in NaAlCl₄-Schmelze (B. Cleaver, V.S. Sharivker, J. Electrochem. Soc., Vol. 142, 3409-3413, (1995)).

In DE 3718920 wird die Herstellung von Salzschmelzen über die Zugabe eines reinen Metalls und eines Alkalimetallhalogenids zur Schmelze beschrieben. Die Reaktionszelle wird oberhalb des Schmelzpunktes der Salzschmelze betrieben. Das Alkalimetallhalogenid ist in dem Ausführungsbeispiel NaCI, das schmelzflüssige Alkalimetall Natrium, und der Separator ist Beta-Aluminiumoxid. Aufgrund des Einsatzes von reinem Natrium müssen besondere Sicherheitsvorkehrungen, wie das Arbeiten unter Schutzgasatmosphäre, getroffen werden. Die Reaktionen müssen in separaten Zellen ablaufen, da eine Vergiftung des Separators durch das gebildete Nebenprodukt AlHal₃ verhindert werden muß.

Bisher bekannte Herstellverfahren für Salzschmelzen arbeiten sämtlich chargenweise. Eine Ansatzfahrweise besitzt gegenüber einem kontinuierlichen Hersteilverfahren einige gravierende Nachteile. Bei einem Chargenwechsel muß die Apparatur geöffnet werden. Dabei kann das Produkt durch den Sauerstoff der Umgebungsiuft, Wasser und Staub verunreinigt werden. Durch den Chargenwechsel kommt es zu Standzeiten der Anlage und damit zu einer verringerten Raum-Zeit-Ausbeute. Für ein effektives diskontinuierliches Verfahren muß mit großen Apparaturen gearbeitet werden. Der Einfahrprozeß benötigt entsprechend mehr Energie und Zeit. Es hat sich gezeigt, daß insbesondere beim Anfahren der Anlagen Verunreinigungen in den Prozeß eingeschleust werden. In FR 2168912 wird ein aufwendiges Reinigungsverfahren für Alkalihalogenaluminate dargestellt. Der 2-stufige Reinigungsprozeß setzt sich aus einer Sauerstoffbehandlung zum Abbau der organischen Verunreinigungen und einer Aluminiumbehandlung zur Fällung von Eisen und Schwermetallen zusammen. Die Aluminiumbehandlung muß unter Stickstoff- oder Argonatmosphäre durchgeführt werden.

Zur Herstellung der Alkalihalogenaluminate wird die Reaktion von entsprechenden Aluminiumhalogeniden und Alkalihalogeniden im geschlossenen Rohr beschrieben (Friedmann, Taube, J. Am. Chem. Soc., 72, 2236-2243, (1950)). Es wurde bei diesem Verfahren ein Druckanstieg auf bis zu 6-7 Atmosphären festgestellt, was zu Problemen führt (FR 2168912). Die Apparaturen müssen mit den entsprechenden Sicherheitsvorkehrungen ausgestattet werden.

Für die kontinuierliche Verarbeitung der Salze kommen grundsätzlich Rohrreaktoren und kontinuierliche Rührreaktoren in Frage.

Rohrreaktoren sind ideale Reaktoren für die kontinuierliche Verarbeitung flüssiger Medien. Hier ist die Verweilzeitverteilung sehr eng, so daß alle Teilchen mit annähernd der gleichen Verweilzeit behaftet sind und damit eine sehr enge Qualitätsverteilung erzeugt wird. Durch ein hohes Oberflächen/Volumen Verhältnis und eine turbulente Strömung ist ein Rohrreaktor gut für Wärmeübertragung geeignet. Für eine Anwendung auf einen Feststoff fehlt jedoch die Voraussetzung der Fließfähigkeit. Zudem ist die Wärmeübertragung zur Aufschmelzung eines Salzgemisches wegen der schlechten Wärmeleitung der granularen Edukte sehr schlecht, was zu sehr langen Verweilzeiten führt.

Eine andere Möglichkeit der kontinuierlichen Reaktionsführung stellt der kontinuierliche Rührreaktor dar. Hier können die granulierten Edukte der gerührten Schmelze zudosiert werden. Dadurch wird ein konvektiver Wärmeübergang ermöglicht, der die Erwärmung der Edukte deutlich beschleunigt. Insbesondere, wenn sublimierende Salze als Edukte verwendet werden sollen, ist eine Temperatur unterhalb der Sublimationstemperatur erforderlich, um einen Überdruck im System zu vermeiden. Ein gravierender Nachteil des kontinuierlichen Rührreaktors ist die Verweilzeitverteilung. Diese bewirkt, daß im Produktablauf immer ein deutlicher Anteil nicht umgesetzter Edukte enthalten ist.

Aufgabe der Erfindung ist es, ein kontinuierliches Verfahren zur Herstellung reiner Salzschmelzen zur Verfügung zu stellen, das die nachteiligen Umgebungseinflüsse ausschließt, den Energiebedarf minimiert und eine optimale Raum-Zeit-Ausbeute ermöglicht. Aufgabe ist es auch, große Mengen von Salzschmelzen in kürzester Zeit zur Verfügung zu stellen.

Die erfindungsgemäße Aufgabe wird gelöst durch eine Vorrichtung zur Herstellung von Salzschmelzen und deren Mischungen der allgemeinen Formel

MDX₄ (I)

worin
- M: Li, Na, K, Rb, Cs
- D: Al, Ga, In, Tl
- X: F, Cl, Br, l
bedeuten, bestehend im wesentlichen aus einem beheizbaren Rührkessel (1) und einem nachgeschalteten Rohrreaktor (4), wobei der Rührkessel (1) eine Zone enthält, welche aufgrund der Behältergeometrie keine Feststoffe aufweisen kann, und der Rohrreaktor (4) oder dessen Zuführung in diese feststofffreie Zone hineinreicht.

Gegenstand der Erfindung ist ferner ein Verfahren zur Herstellung von Salzschmelzen und deren Mischungen der allgemeinen Formel (I) durch Umsetzung eines Metallhalogenids der Formel DX₃ (II) mit einem Alkalisalz der Formel MX (III) in der oben genannten Vorrichtung.

Die Verfahrensprodukte sind für die Verwendung als Schmeizelektrolyt in elektrochemischen Zellen, als Speichermedium in Wärmespeichern, als Wärmeübertragungsmittel, z.B. in Heizbädern, zum Abdecken und Reinigen geschmolzener Metalle, zur galvanotechnischen Beschichtung von hochschmelzenden Werkstoffen oder als Schmelzelektrolyte in wiederaufladbaren Natriumbatterien und Primärbatterien geeignet.

Überraschend wurde gefunden, daß durch eine geeignete Kombination aus kontinuierlichem Rührreaktor und mehreren Rohrreaktoren eine Salzschmelze gewünschter Qualität kontinuierlich erzeugt werden kann.

Für das Verfahren können alle dem Fachmann geeignet erscheinenden kontinuierlich arbeitenden und beheizbaren Rührreaktoren verwendet werden. Für die Rühraufgabe können alle geeigneten Rührer, wie Propeller-, Schrägblatt-, Scheiben-, Impeller-, Kreuzbalken-, Gitter-, oder Blatt-Rührer, verwendet werden. Durch das Rührwerk soll ein guter Wärmeübergang zwischen Reaktorwand und Salz bzw. Schmelze ermöglicht werden.

Üblicherweise bestehen Rührreaktoren aus Stahl. Durch die agressiven Salzschmelzen kann dieses Material korrosiv angegriffen werden.

Es wurde gefunden, daß in Rührreaktoren, deren wesentlichen Bauteile aus Nickellegierungen hergestellt sind, für die Verarbeitung von Salzen und deren Schmelzen besonders geeignet sind. Durch die relativ geringe mechanische Beanspruchung des Reaktormantels kann auch Nickel als Behältermaterial verwendet werden. Ebenso können Reaktoren aus Glas eingesetzt werden. Es wurde weiterhin gefunden, daß die mit den Salzen bzw. deren Schmelzen in Berührung kommenden Metallteile des Rührkessels gegen korrosive und abrasive Schädigungen geschützt werden können, durch Oberflächenbeschichtungen mit dem Fachmann bekannten Materialien wie PTFE/PFA, Emaille oder keramische Materialien.

Für die Verbesserung des Wirkungsgrades des Rührreaktors ist es erforderlich, daß kein Feststoff in den Überlauf des Reaktors gelangt. Überraschend wurde gefunden, daß die Realisierung dieser Aufgabe durch eine Beruhigungszone im Reaktor erfolgen kann. Diese Beruhigungszone ist so gestaltet, daß sie einen Zulauf für das Gemisch von unten hat und die so groß bemessen ist, daß der Feststoff im aufströmenden Gemisch sedimentieren kann.

An den nachgeschalteten beheizbaren Rohrreaktor werden ähnliche Materialanforderungen gestellt, wie an den Rührreaktor. Geeignet sind neben Stahl, Nickel und Nickellegierungen auch mit PTFE/PFA, Emaille oder keramischen Materialien beschichtete Stahlreaktoren.

Ein wesentlicher Vorteil liegt in der Kombination von Rührreaktor mit Rohrreaktor. Im nachgeschalteten Rohrreaktor kann eine höhere Temperatur eingestellt werden. Das führt dazu, daß nicht gelöstes Alkalisalz bei den höheren Temperaturen in endlicher Verweilzeit in der Schmelze gelöst wird und abreagiert.

Die Umsetzung im Rührreaktor und Rohrreaktor kann in Gegenwart von Luftsauerstoff oder gegebenenfalls unter Schutzgasatmosphäre (z.B. Stickstoff, CO₂, Edelgase) bei vermindertem Druck, Normaldruck aber auch bei Überdruck bei Temperaturen von 50°C bis 800°C (bei Normaldruck) durchgeführt werden. Beim Arbeiten unter Überdruck oder vermindertem Druck verschieben sich die Schmelzpunkte der Salze entsprechend.

Die Verarbeitung sollte unterhalb der Sublimationstemperatur der Ausgangsstoffe durchgeführt werden. Bevorzugt wird bei höheren Temperaturen gearbeitet, da die Löslichkeit der Salze unter solchen Bedingungen wesentlich besser ist.

Während der Verarbeitung der Salze im Rührreaktor und im Rohrreaktor kann durch Heizbänder oder Doppelmantelheizung eine optimale Temperaturführung während des Prozesses eingestellt werden.

Das Verfahren kann je nach Bedarf kontinuierlich oder diskontinuierlich geführt werden.

Zur Durchführung des Verfahrens können als Metallhalogenid Aluminium-, Gallium-, Indium- oder Thallium-fluorid, -chlorid, -bromid oder -jodid und deren Mischungen eingesetzt werden. Geeignete Alkalisalze sind Lithium-, Natrium-, Kalium-, Rubidium- oder Cesium fluorid, -chlorid, -bromid oder -jodid und deren Mischungen.

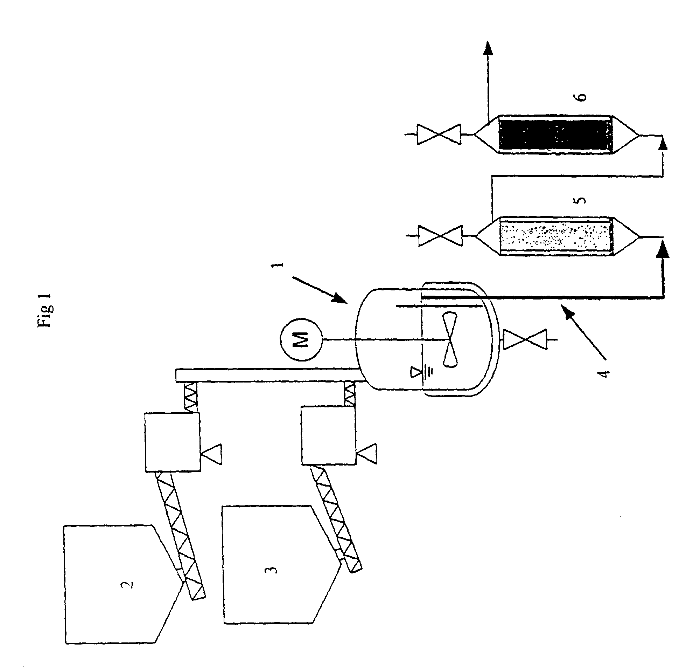

Nachfolgend wird ein allgemeines Beispiel der Erfindung näher erläutert, das in der Zeichnung dargestellt ist. Es zeigt Fig. 1 einen Rührreaktor 1 mit Feststoffdosierer 2 und 3, Rohrreaktor 4 und nachgeschalteten Kolonnen oder Säulen 5 und 6.

Zur Herstellung von Salzen, entsprechend der Formel (I), und deren Mischungen, können die Rohstoffe dem Reaktor separat über Feststoffdosierer (2) und (3) zugeführt werden. Die Rohstoffe können auch im gleichen Verhältnis, vorgemischt, über einen Dosierer zugeführt werden. Die Befüllung kann unter Inertgas durchgeführt werden.

Der beheizbare Rührreaktor (1) mit Rührwerk enthält flüssige Salzschmelze. Das Volumen dieser Schmelze wird in Abhängigkeit von der erforderlichen Verweilzeit und dem gewünschten Durchsatz bestimmt. Im Rührkessel werden die Materialien bei Temperaturen oberhalb des Schmelzpunktes des Salzes und unterhalb der Sublimationstemperatur des jeweiligen Metallhalogenids umgesetzt.

Der Füllstand des Reaktors wird durch ein Überlaufrohr oder eine elektrisch gesteuerte Pumpe konstant gehalten. Damit kein fester Rohstoff in den Überlauf gelangt, befindet sich eine Beruhigungszone im Reaktor, die einen Zulauf für das Gemisch von unten hat und die so groß bemessen ist, daß der Feststoff im ausströmenden Gemisch sedimentieren kann. Diese Zone hat keinen Zulauf von der Flüssigkeitsoberfläche und ist hinreichend von der Turbulenz des Rührers abgeschirmt. Alternativ kann eine rotierende Trommel verwendet werden, aus deren Zentrum das Produkt abgezogen wird und deren Zentrifugalkraft den Feststoff abtrennt. Auch ein Hydrozyklon ist für diese Aufgabe geeignet, wenn über eine Pumpe eine ausreichende Strömungsgeschwindigkeit erzeugt wird.

Um den Wirkungsgrad zu erhöhen, wird dem Rührreaktor ein Rohrreaktor (4) nachgeschaltet.

In dem Rohrreaktor kann bei höheren Temperaturen als im Rührreaktor gearbeitet werden. Dadurch kann nicht gelöstes Alkalisalz in der Schmelze gelöst und die Ausbeute erhöht werden.

Der Rohrreaktor wird vorteilhafterweise vertikal angeordnet. Damit wird die Sedimentation des Feststoffes an der Gefäßwand verhindert. Zudem kann auf Pumpen verzichtet werden, da der Stofftransport über die Schwerkraft erfolgt.

Durch Kontakt mit Wasser bzw. Luftfeuchtigkeit kann die Schmelze verunreinigt sein. Der entstehende Halogenwasserstoff wird über eine mit dem entsprechenden Metallgranulat gefüllte Säule oder Kolonne (5) geführt. Vorteilhafterweise wird die Säule oder Kolonne von der Schmelze von unten nach oben durchströmt. Der Halogenwasserstoff reagiert mit dem Metall zu DX₃. Zur weiteren Verarbeitung wird das Metallhalogenid über eine weitere Säule oder Kolonne (6) geleitet. Die mit Alkalisalz MX bestückte Säule oder Kolonne wird ebenfalls von unten nach oben durchströmt. Hierbei wird das Metallhalogenid DX₃ mit dem Alkalisalz MX zum gewünschten Salz MDX₄ umgesetzt.

Die Durchströmung der Säulen oder Kolonnen (5) und (6) von unten nach oben ist nicht zwingend. Sie hat jedoch den Vorteil, daß die durch die Reaktion kleiner werdenden Metall-Partikel D und Metallhalogenid-Partikel DX₃ nicht durch die Strömung auf die Siebplatte gedrückt werden und diese verstopfen. Dennoch ist auf diese Weise eine homogene Durchströmung (Pfropfenströmung) in der Säule gewährleistet. Die homogene Durchströmung ist für die vollständige Umsetzung in der Säule wesentliche Voraussetzung.

Das im folgenden gegebene Beispiel wird zur besseren Veranschaulichung der vorliegenden Erfindung gegeben, ist jedoch nicht dazu geeignet, die Erfindung auf die hierin offenbarten Merkmale zu beschränken.

### Beispiele

### Beispiel 1:

### Darstellung von NaAlCl₄

Zur Herstellung von 1 kg/h NaAlCl₄ wird einem beheizbaren Rührreaktor über eine Feststoffdosierung 373,8 g/h NaCI und über eine weitere Feststoffdosierung 626,2 g/h AlCl₃ zugeführt. Der Rührreaktor aus Glas mit Propeller-Rührer und ölbeheiztem Doppelmantel enthält ein Volumen flüssiger Salzschmelze bei einer Temperatur, die unterhalb der Sublimationstemperatur des AlCl₃ (180°C) liegt, aber oberhalb der Schmelztemperatur des Salzes (156°C). Durch intensives Rühren wird ein inniger Kontakt zwischen flüssiger Schmelze und der beheizten Reaktorwand einerseits, sowie dem kalten Rohstoff andererseits hergestellt. Das bewirkt einen guten Wärmeübergang, so daß die mittlere Verweilzeit bei ca. 5 min liegt.

Der Füllstand des Reaktors wird durch ein Überlaufrohr konstant gehalten. Die Verunreinigung der Produkte durch nicht umgesetzte Rohstoffe wird hier durch die Nachschaltung eines Rohrreaktors (4) unterbunden. Durch die Einstellung höherer Temperaturen im Rohrreaktor, hier 200°C, kann nicht gelöstes NaCl in der Schmelze abreagieren. Der vertikal angeordnete Rohrreaktor verhindert die Sedimentation des verbleibenden Feststoffes. Zudem sind keine Pumpen notwendig, da der Stofftransport über die Schwerkraft erfolgt.

Die möglicherweise durch Wasser verunreinigte Schmelze kann Halogenwasserstoff bilden. Dieser kann durch zwei nachgeschaltete Säulen, die mit Aluminiumgranulat (5) und mit NaCI (6) befüllt sind, abreagieren. In den von unten nach oben durchströmten Säulen kann zuerst der Halogenwasserstoff mit Aluminium zu AlCl₃ und anschließend in der zweiten Säule mit dem Salz NaCl zum Produkt NaAlCl₄ reagieren.

## Patentansprüche

1. Vorrichtung zur Herstellung von Salzschmelzen und deren Mischungen der allgemeinen Formel
MDX₄ (I)
worin
M Li, Na, K, Rb, Cs
D Al, Ga, In, Tl
X F, Cl, Br, I
bedeuten, bestehend im wesentlichen aus einem beheizbaren Rührkessel (1) und einem nachgeschalteten Rohrreaktor (4), wobei der Rührkessel (1) eine Zone enthält, welche aufgrund der Behältergeometrie keine Feststoffe aufweisen kann, und der Rohrreaktor (4) oder dessen Zuführung in diese feststofffreie Zone hineinreicht.

2. Vorrichtung nach Anspruch 1, **dadurch gekennzeichnet, daß** der Rohrreaktor (4) vertikal angeordnet ist.

3. Vorrichtung nach Anspruch 1 oder 2, **dadurch gekennzeichnet, daß** vor dem Rührkessel (1) Feststoffdosiereinheiten (2, 3) zur kontrollierten Zugabe oder Vermischung der Ausgangsmaterialien angeordnet sind

4. Vorrichtung nach einem der Ansprüche 1 bis 4, **dadurch gekennzeichnet, daß** nach dem Rohrreaktor (4) eine Aufreinigungseinheit (5, 6) angeordnet ist, bestehend aus einer mit Metallgranulat (D) befüllten Säule oder Kolonne (5) und einer mit Alkalisalz (MX) befüllten Kolonne oder Säule (6).

5. Verfahren zur Herstellung von Salzschmelzen der allgemeinen Formel
MDX₄ (I)
worin
M Li, Na, K, Rb, Cs
D Al, Ga, In, Tl
X F, Cl, Br, I
bedeuten, durch Umsetzung eines Metallhalogenids der Formel DX₃ (II) mit einem Alkalisalz der Formel MX (III), **dadurch gekennzeichnet, daß** die Ausgangsmaterialien über Feststoffdosiereinheiten (2, 3) zudosiert, die Ausgangsmaterialien in einer Vorrichtung gemäß der Ansprüche 1 bis 4 gerührt werden und die Schmelze über eine Beruhigungszone im Rührreaktor (1) von den Feststoffen abgetrennt wird, wobei dem Rührreaktor (1) ein Rohrreaktor (4) zur Umsetzung nicht umgesetzter Ausgangsmaterialien nachgeschaltet ist.

6. Verfahren nach Anspruch 5, **dadurch gekennzeichnet, daß** die Umsetzung der Salze bei verschiedenen Temperaturen im Rührreaktor (1) und Rohrreaktor (4) durchgeführt wird.

7. Verfahren nach Anspruch 5 oder 6, **dadurch gekennzeichnet, daß** die Umsetzung der Salze bei Temperaturen zwischen 50 und 800°C erfolgt.

8. Verfahren nach einem der Ansprüche 5 bis 7, **dadurch gekennzeichnet, daß** die Umsetzung kontinuierlich erfolgt.

## Claims

1. Apparatus for the preparation of salt melts, and mixtures thereof, of the general formula
MDX₄ (I)
in which
M is Li, Na, K, Rb or Cs,
D is Al, Ga, In or Tl, and
X is F, Cl, Br or I,
essentially consisting of a heatable stirred reactor (1) and a downstream tubular reactor (4), where the stirred reactor (1) contains a zone which, owing to the tank geometry, cannot contain solids, and the tubular reactor (4) or its feed line extends into this solid-free zone.

2. Apparatus according to Claim 1, **characterized in that** the tubular reactor (4) is arranged vertically.

3. Apparatus according to Claim 1 or 2, **characterized in that** solids metering units (2, 3) for controlled addition or mixing of the starting materials are arranged upstream of the stirred reactor (1).

4. Apparatus according to one of Claims 1 to 3, **characterized in that** a purification unit (5, 6), consisting of a column or tower (5) filled with metal granules (D) and a tower or column (6) filled with alkali metal salt (MX), is arranged downstream of the tubular reactor (4).

5. Process for the preparation of salt melts of the general formula
MDX₄ (I)
in which
M is Li, Na, K, Rb or Cs,
D is Al, Ga, In or Tl, and
X is F, Cl, Br or I,
by reacting a metal halide of the formula DX₃ (II) with an alkali metal salt of the formula MX (III), **characterized in that** the starting materials are metered in by way of solids metering units (2,3) and are stirred in apparatus according to Claims 1 to 4 and the melt is separated from the solids by way of a calming zone in the stirred reactor (1), a tubular reactor (4) for reacting unreacted starting materials being arranged downstream of the stirred reactor (1).

6. Process according to Claim 5, **characterized in that** the salts are reacted at different temperatures in the stirred reactor (1) and the tubular reactor (4).

7. Process according to Claim 5 or 6, **characterized in that** the salts are reacted at temperatures between 50 and 800°C.

8. Process according to one of Claims 5 to 7, **characterized in that** the reaction is carried out continuously.

## Revendications

1. Dispositif pour fabriquer des sels fondus et des mélanges de ceux-ci de la formule générale
MDX₄ (I)
dans laquelle
M représente Li, Na, K, Rb, Cs,
D représente Al, Ga, In, Tl,
X représente F, Cl, Br, I,
composé essentiellement d'une cuve agitatrice (1) pouvant être chauffée et d'un réacteur tubulaire (4) en aval, dans lequel la cuve agitatrice (1) contient une zone qui ne peut pas présenter de solides compte tenu de la géométrie de la cuve et le réacteur tubulaire (4) ou son alimentation s'étend à l'intérieur de cette zone dépourvue de solides.

2. Dispositif selon la revendication 1, **caractérisé en ce que** le réacteur tubulaire (4) est disposé verticalement.

3. Dispositif selon la revendication 1 ou la revendication 2, **caractérisé en ce que** des unités de dosage de solides (2, 3) sont disposées en amont de la cuve agitatrice (1) afin d'ajouter ou mélanger de manière contrôlée les matériaux de départ.

4. Dispositif selon l'une des revendications 1 à 3, **caractérisé en ce qu'**une unité de purification (5, 6) composée d'une colonne ou tour (5) remplie de granulat de métal (D) et d'une tour ou colonne (6) remplie de sel alcalin (MX) est disposée en aval du réacteur tubulaire (4) .

5. Procédé pour fabriquer des sels fondus de la formule générale
MDX₄ (I)
dans laquelle
M représente Li, Na, K, Rb, Cs,
D représente Al, Ga, In, Tl,
X représente F, Cl, Br, I,
en faisant réagir un halogénure métallique de la formule DX₃ (II) avec un sel alcalin de formule MX (III), **caractérisé en ce que** les matériaux de départ sont dosés au moyen d'unités de dosage de solides (2, 3), **en ce que** les matériaux de départ sont agités dans un dispositif selon les revendications 1 à 4 et **en ce que** la fusion est séparée des solides dans une zone de stabilisation du réacteur tubulaire (1), un réacteur tubulaire (4) étant placé en aval du réacteur agitateur (1) pour faire réagir les matériaux de départ n'ayant pas réagi.

6. Procédé selon la revendication 5, **caractérisé en ce que** la réaction des sels se fait à des températures différentes dans le réacteur agitateur (1) et dans le réacteur tubulaire (4).

7. Procédé selon la revendication 5 ou la revendication 6, **caractérisé en ce que** la réaction des sels se fait à des températures dans la plage de 50 à 800°C.

8. Procédé selon l'une des revendications 5 à 7, **caractérisé en ce que** la réaction se fait en continu.
